Europäisches Patentamt

(19) European Patent Office

Office européen des brevets

(11) Publication number: **0 322 373 B1**

## (12) EUROPEAN PATENT SPECIFICATION

(45) Date of publication of patent specification :
02.05.91 Bulletin 91/18

(21) Application number: 88830535.6

(22) Date of filing : 13.12.88

(51) Int. Cl.⁵ : **B60N 2/48**

(54) A headrest for motor vehicle seats.

(30) Priority : **21.12.87 IT 6809787**
**21.12.87 IT 6809987**

(43) Date of publication of application :
**28.06.89 Bulletin 89/26**

(45) Publication of the grant of the patent :
**02.05.91 Bulletin 91/18**

(84) Designated Contracting States :
**AT BE CH DE ES FR GB GR IT LI LU NL SE**

(56) References cited :
**DE-A- 3 045 391**
**FR-A- 2 577 869**
**US-A- 3 511 535**

(73) Proprietor : **GESTIND-M.B." MANIFATTURA
DI BRUZOLO" S.P.A**
**Strada Statale 25 km. 41**
**I-10050 Bruzolo (Torino) (IT)**

(72) Inventor : **De Filippo, Emilio**
**Via Vergnatte, 2**
**I-10050 Bruzolo Torino (IT)**

(74) Representative : **Buzzi, Franco et al
c/o Jacobacci-Casetta & Perani S.p.A. Via
Alfieri, 17**
**I-10121 Torino (IT)**

EP 0 322 373 B1

Jouve, 18, rue Saint-Denis, 75001 PARIS

## Description

The present invention relates to a headrest for motor vehicle seats, according to the pre-characterizing portion of claim 1.

A headrest of this type is known from DE-A-3 045 391. This document shows a headrest comprising a yielding body which incorporates a supporting framework of moulded plastics material having two integral tubular parts for housing respective support shafts. A series of positioning notches are formed within each tubular part. A resilient locking member carried by the respective support shaft cooperates with the positioning notches of each tubular part.

In the headrest shown in DE-A-3 045 391 the positioning notches are directly formed in the inner surfaces of the tubular parts during the moulding of the supporting framework. The integral formation of the notches during the moulding of the framework inevitably forms in each tubular part a series of holes which faces the corresponding series of notches. When the padding of expanded elastomeric material is applied to the framework, some expanded material could be introduced through the holes into the tubular parts.

In order to avoid this problem, the present invention provides a headrest of the type specified above, having the features recited in the characterizing portion of claim 1.

By virtue of this characteristic, an effective adjustment device is produced at a particularly low manufacturing cost.

Further characteristics and advantages of the present invention will become clear from the detailed description which follows with reference to the appended drawings, provided by way of non-limiting example, in which ;

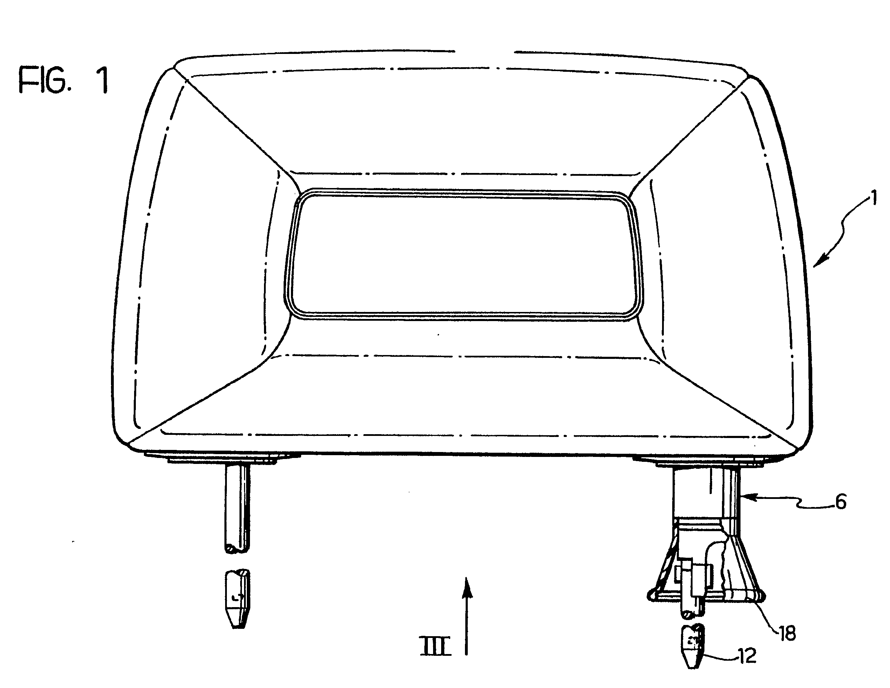

Figure 1 is a front elevational view of a headrest according to the present invention,

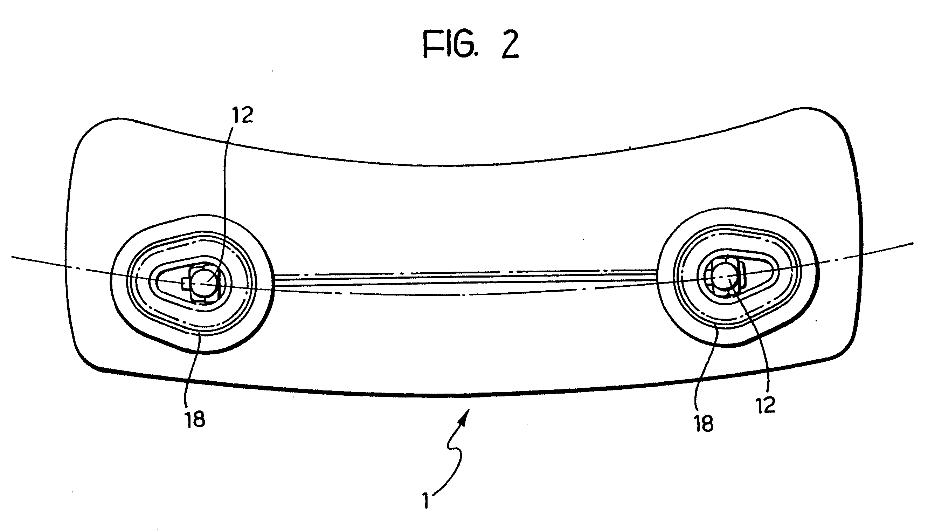

Figure 2 is a view taken on the arrow III of Figure 1,

Figure 3 shows a section of the present invention, and

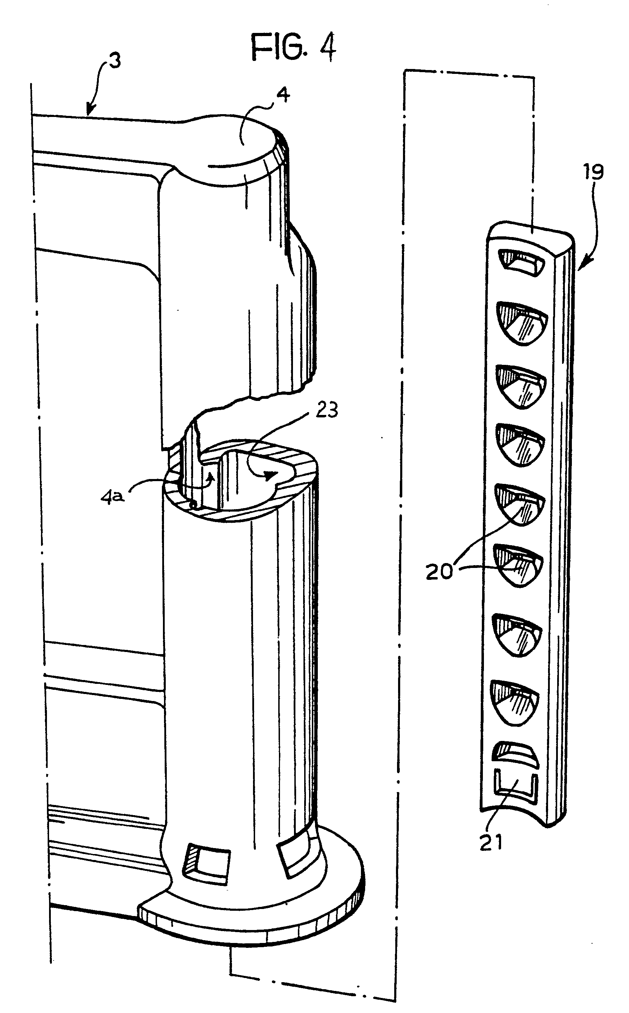

Figure 4 is a partially-sectioned, exploded perspective view of two components according to Figure 3, on an enlarged scale.

With reference to the drawings, a headrest, indicated 1, is intended to be fitted to the top of the backrest of a motor car seat (not illustrated).

The headrest 1 comprises a yielding body or pillow 2 of expanded elastomeric material incorporating a supporting framework 3 of moulded plastics material.

In its turn, the framework 3 includes two tubular parts 4 formed integrally by moulding and having internal cylindrical cavities 4a, which are closed at the top, for guiding and housing two support shafts 6.

Each support shaft 6 is constituted by a metal core 8 to which a thick covering 9 of plastics material is applied by moulding. In correspondence with the upper end of the shaft 6, the covering 9 has a shaped recess 10 and two small transverse holes 11 in which the bent ends of a U-shaped spring 7 are engaged. In its rest position, the spring 7 has a portion 7a which projects from the outline of the shaft 6. When this portion 7a is thrust towards the axis of the shaft 6, the spring 7 is flexed and, in its flexed configuration, is housed in the recess 10 formed in the covering 9 of the shaft 6.

Each shaft 6 is articulated at its lower end to a second shaft 12 by means of a pin 13, to enable the angular position of the headrest 1 to be adjusted. The shafts 12 are inserted in a housing situated in the vehicle seat and snap-engage with a resilient element (not illustrated) which fits into a notch 14 formed in the second shaft 12. The articulation ends of the shafts 6 and of the second shafts 12 each have an abutment 15 and a heel 16. When the shafts 6 and the second shafts 12 are aligned, the abutment 15 of the second shaft 12 abuts the heel 16 of the shaft 6 and the abutment 15 of the shaft 6 reciprocally abuts the heel 16 of the second shaft 12. This arrangement makes the articulation zone particularly resistant to bending stresses which act on the articulation zone when the headrest 1 absorbs the impact which occurs in the event of an accident

The plastics covering 9 also covers the zone of articulation of the shafts 6 so that a layer of plastics material is interposed in the articulation contact and generates a slight friction which enables the headrest 1 to remain firmly in positioning any inclined position. The plastics covering 9 in the articulation zone avoids the need for the insertion of plastic washers during assembly.

A circumferential recess 17 is formed in the plastics covering 9 of each shaft 6 above the articulation end of the shaft 12, in which the upper end of a protective casing 18 of rigid plastics material that covers the articulation zone is engaged.

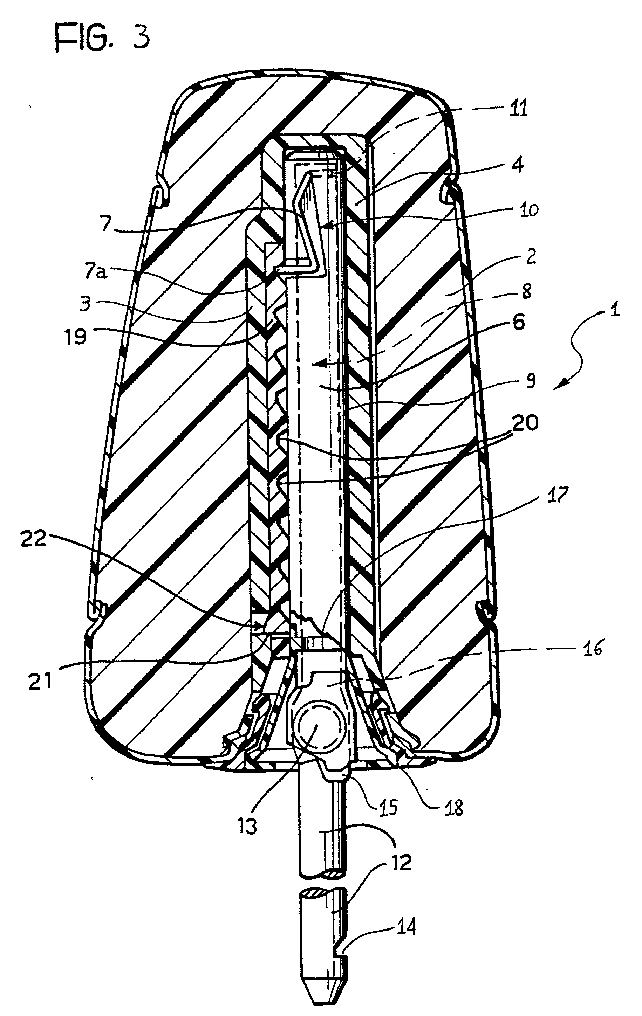

As stated, the integral formation of the notches during the moulding of the supporting structure 3 would inevitably form a series of hole facing the corresponding series of notches. When the padding of expanded elastomeric material is applied to the framework 3, some expanded material could be introduced into said holes and into the cavity 4a. In order to avoid this problem, according to the invention, the tubular parts 4 of the framework are formed with a longitudinal seat 23 of undercut section, in which is inserted an auxiliary strip 19 of plastics material in which notches 20 are formed. Each strip 19 is provided with a resilient tongue 21 which irreversibly snap-engages with a corresponding recess 22 (Figure 3) formed in the base wall of the respective seat 23.

The notches 20 have inclined upper and lower surfaces : their inclinations may be different, so that the downward displacement of the headrest 1 requires a slightly greater force than that necessary for its upward displacement ; this is in order to prevent the headrest 1 from moving down spontaneously under its own weight.

When the portions 7a of the springs 7 are in correspondence with the ends of a pair of notches 20 in order to lock the headrest 1, they also exert a slight transverse force which enables the clearance between the internal cavity 4a of the tubular part 4 and the shaft 6 to be taken up ; this prevents irritating vibrations of the headrest 1 relative to the shafts 6.

If the headrest 1 is displaced relative to the shafts 6, the inclined surfaces of the notches 20 push the springs 7 inwardly of the shafts 6, enabling the headrest 1 to be displaced towards a new position of adjustment.

## Claims

1. A headrest (1) for motor vehicle seats, comprising a yielding body (2) made of expanded elastomeric material, which incorporates a supporting framework (3) of moulded plastics material having two spaced-apart, integral tubular parts (4) for housing a pair of metal support shafts (6), and in which means are provided for the stepwise vertical adjustment of the yielding body (2) relative to the support shafts (6), wherein the stepwise adjustment means comprise a series of positioning notches (20) associated with each tubular part (4) of the supporting framework (3), and a resilient locking member (7) carried by the respective support shaft (6) and cooperating with the positioning notches (20), characterized in that the positioning notches (20) are formed in an auxiliary member (19) inserted and axially locked within each tubular part (4) of the supporting framework (3).

2. A headrest according to Claim 1, characterized in that each of the support shafts (6) comprises a cylindrical metal core (8) with a covering (9) of plastics material which is applied thereto by moulding and to which the respective resilient locking member (7) is anchored.

3. A headrest according to Claim 2, in which each of the shafts (6) is articulated at its lower end to a second support shaft (12) which is intended to be inserted in a housing in the vehicle seat, characterized in that respective abutments (15) and heels (16) are provided between the articulation ends of the support shafts (6) and the second support shafts (12) and are adapted to be arranged in reciprocal stopping abutment when the two shafts (6, 12) are aligned, and in that the articulation ends of the shafts (6) are covered by the covering (9) of plastics material.

## Ansprüche

1. Kopfstütze (1) für Kraftwagensitze, mit einem nachgiebigen Körper (2) aus expandiertem, elastomeren Material, der einen Stützrahmen (3) aus geformtem Kunststoff einschließt, der zwei integrierte voneinander beabstandete Rohrteile (4) zur Aufnahme eines paares von Stützstäben (6) aus Metall aufweist, und in dem Mittel für die stufenweise Vertikalverstellung des nachgiebigen Körpers (2) relativ zu den Stützstäben (6) vorgesehen sind, wobei die Mittel zur stufenweisen Verstellung eine Reihe von jedem Rohrteil (4) des Stützrahmens (3) zugeordneten Positionierrasten (20) und einen elastischen Arretierungsteil (7) aufweisen, der vom jeweiligen Stützstab (6) getragen wird und mit den Positionierrasten (20) zusammenwirkt, dadurch gekennzeichnet, daß die Positionierrasten (20) in einem Zusatzteil (19) geformt sind, der in jedem Rohrteil (4) des Stützrahmens (3) angebracht und in diesem axial verriegelt ist.

2. Kopfstütze nach Anspruch 1, dadurch gekennzeichnet, daß jeder Stützstab (6) einen zylindrischen Metallkern (8) mit einer Umhüllung (9) aus Kunststoff aufweist, die auf diesen aufgeformt und an der der jeweilige elastische Arretierteil (7) verankert ist.

3. Kopfstütze nach Anspruch 2, in welcher jeder Stab (6) an seinem unteren Ende mit einem zweiten Stützstab (12) gelenkig verbunden ist, der in ein Gehäuse im Kraftwagensitz einfürbar ist, dadurch gekennzeichnet, daß entsprechende Widerlager (15) und Absätze (16) zwischen den gelenkigen Enden der Stützstäbe (6) und den zweiten Stützstäben (12) vorgesehen und so beschaffen sind, daß sie sich gegenseitig stützend aneinanderestoßen, wenn die beiden Stäbe (6, 12) fluchten, und daß die gelenkigen Enden der Stäbe (6) von der Umhüllung (9) aus kunststoff bedeckt sind.

## Revendications

1. Appui-tête (1) pour des sièges de véhicules à moteur, comprenant un corps élastique (2) fait d'élastomère expansé, qui incorpore une structure de support (3) en matière plastique moulée ayant deux parties tubulaires (4), faisant partie intégrante, espacées l'une de l'autre, pour loger une paire d'arbres de support en métal (6), et dans lequel des moyens sont prévus pour le réglage vertical par paliers du corps élastique (2) par rapport aux arbres de support (6), dans lequel les moyens de réglage par paliers comprennent une série d'encoches de positionnement (20) associées à chaque partie tubulaire (4) de la structure de support (3), et un élément de verrouillage élastique (7) porté par l'arbre de support respectif (6) et coopérant avec les encoches de positionnement (20), caractérisé en ce que les encoches de positionnement (20) sont formées dans un élément auxiliaire (19) inséré et verrouillé axialement à l'intérieur de chaque partie tubulaire (4) de la structure de support (3).

2. Appui-tête selon la revendication 1, caractérisé en ce que chacun des arbres de support (6) comprend une âme cylindrique en métal (8) avec un revêtement (9) en matière plastique qui est appliqué par moulage et auquel l'élément de verrouillage élastique respectif (7) est fixé.

3. Appui-tête selon la revendication 2, dans lequel chacun des arbres (6) est articulé au niveau de son extrémité inférieure sur un second arbre de support (12) qui est destiné à être inséré dans une enveloppe du siège du véhicule, caractérisé en ce que des butées (15) et talons (16) respectifs sont placés entre les extrémités articulées des arbres de support (6) et les seconds arbres de support (12) et sont adaptés pour être disposés en butée d'arrêt réciproque lorsque les deux arbres (6, 12) sont alignés, et en ce que les extrémités articulées des arbres (6) sont recouvertes du revêtement (9) en matière plastique.

FIG. 1

EP 0 322 373 B1

# FIG. 2

EP 0 322 373 B1

FIG. 3

# FIG. 4